# EUROPEAN PATENT APPLICATION

(11) **EP 2 779 600 A1**
(43) Date of publication of application: **17.09.2014**
(21) Application number: 12848162.9
(22) Date of filing: 17.01.2012
(51) Int. Cl.: H04M 1/22, H05B 37/02

(54) **ELECTRONIC DEVICE TERMINAL AND METHOD FOR SETTING SHELL COLOR THEREOF**

(30) Priority: 09.11.2011 CN 201110352018
(71) Applicant: ZTE Corporation, Shenzhen, Guangdong 518057 (CN)
(72) Inventor: NING, Haiyan, Shenzhen Guangdong 518057 (CN)
(74) Representative: Gevers Patents
(86) International application number: PCT/CN2012/070469
(87) International publication number: WO 2013/067774

(57) **Abstract**

An electronic User Equipment (UE) and a method for setting a shell color thereof are disclosed, so as to solve the limitation of selecting a shell color through a menu in the prior art. The UE acquires color information stored in the UE or color information of an environment around the UE, acquires display color information of each color in the color information and information of three primary colors corresponding to the display color information of each color, obtains switching frequencies of Light Emitting Diode (LED) lamps according to a relationship between the information of the three primary colors corresponding to the display color information of each color and the switching frequencies of the LED lamps in an LED lamp group, and then controls switches and brightness of the LED lamps according to the switching frequencies of the LED lamps, such that a shell provided with the LED lamp group displays a corresponding color. The present disclosure implements to acquire the color of the exterior environment as the shell color of the UE, so that the alterable range of the shell color of the UE may be improved greatly and the limitation to the change in the shell color of the UE due to the geography location may be avoided.

## Description

### TECHNICAL FIELD

The disclosure relates to the application fields of an electronic User Equipment (UE), and in particular relates to an electronic UE and a method for setting a shell color thereof.

### BACKGROUND

With people's pursuit of quality of life, the requirements for user experience of a mobile terminal are increasing. Moreover, the pursuit of personality and beauty is human nature. For example, the shell color of a mobile phone, when sold, is very limited, such as red, white, black or the like, or only one color. When purchasing, a user sometimes has not found his favourite color yet. If the user wants to change the color of the mobile phone after purchasing, the shell has to be replaced or various pictures are added, which lacks convenience and good effects.

In order to solve the above problem, corresponding solutions were proposed in the prior art. The specific patent documents include a Chinese patent application entitled "COLOR-CHANGING MOBILE PHONE" with the publication number CN101834924 and another Chinese patent application entitled "SHELL COLOR CHANGEABLE MOBILE PHONE" with the publication number CN201374739. The invention with the publication number CN101834924 provides a color-changing mobile phone, i.e., using a temperature sensing reversible color-changing material which is poured to the phone shell or is embedded in the phone shell. The shape of the temperature sensing reversible color-changing material is selected from triangle, five-pointed star, round, square, or cartoon images. The temperature sensing reversible color-changing material appears pink when the temperature is 0°C ∼ 11 °C, white when the temperature is 12°C ∼ 24°C, and green when the temperature is greater than 25°C.

In the Chinese patent application with the publication number CN101834924, however, because the temperature sensing material is limited by the outdoor temperature, it will not appear pink in some areas where the outdoor temperature keeps more than 12°C. Therefore, users in some locations cannot obtain a desired color.

In the Chinese patent application with the publication number CN201374739, the color of the mobile phone shell may change with temperature. Users can also select, according to their needs, a color from a menu to set the color of the mobile phone shell. The technical content is controlling the variation of display colors of three LED light groups according to the voltage variation in color adjustment information to achieve change in the shell color.

However, in the patent CN201374739, since the color is selected from several fixed setting colors in the menu, the selectable colors are limited and sometimes some users' requirements cannot be met. Furthermore, in this patent document, the problem is that some colors that users want to use cannot be obtained, since the variation of voltage and current is used to control the combination of colors of LED lamps to implement change in the shell color.

### SUMMARY

The present disclosure provides an electronic UE and a method for setting a shell color thereof, so as to solve the limitation of selecting the shell color by the electronic UE through a menu in the prior art.

To this end, the disclosure provides an electronic UE, which includes:
a shell, made of a light transmission material;
a Light Emitting Diode (LED) lamp group, arranged in a surface of a shell or inside the shell;
an LED driver, connected with the LED lamp group and configured to control switches and brightness of the LED lamp group;
a color picker, configured to acquire color information stored in the electronic UE or color information of an environment around the electronic UE, and acquire display color information of M colors in the color information and information of three primary colors corresponding to display color information of each color, wherein M is greater than or equal to 1;
a baseband chip, arranged in the electronic UE, connected with the color picker, and configured to receive and store the display color information of the M colors and the information of the three primary colors corresponding to the display color information of each color; and
a color setter, arranged in the electronic UE, connected with the baseband chip, and configured to: read the display color information of the M colors from the baseband chip, display the M colors, and after receiving information indicating a user selects a first color from the M colors, send display color information corresponding to the first color to the baseband chip,
wherein after the baseband chip receives the display color information of the first color, the baseband chip takes information of three primary colors corresponding to the first color according to the display color information of the first color, and sends the information of the three primary colors corresponding to the first color to the LED driver; after the LED driver receives the information of the three primary colors corresponding to the first color, the LED driver controls switches and brightness of multiple LED lamps of the LED lamp group based on the information of the three primary colors corresponding to the first color, such that the shell provided with the LED lamp group displays the first color.

A method for setting a shell color of an electronic UE includes:
color information stored in the electronic UE or color information of an environment around the electronic UE is acquired, and display color information of M colors in the color information and information of three primary colors corresponding to display color information of each color are acquired, wherein M is greater than or equal to 1;
information indicating a user selects a first color from the M colors is received, and according to that information, display color information corresponding to the first color is obtained;
information of three primary colors corresponding to the first color is taken according to the display color information of the first color, and switching frequencies of LED lamps are obtained according to a relationship between the information of the three primary colors corresponding to the first color and the switching frequencies of the LED lamps in an LED lamp group; and
switches and brightness of the LED lamps are controlled according to the switching frequencies of the LED lamps, such that a shell provided with the LED lamp group displays the first color.

One or two of the technical solutions at least have the following technical effect:

The UE acquires the color information stored in itself or the color information of the environment around the UE, acquires the display color information of each color in the color information and the information of the three primary colors corresponding to the display color information of each color, obtains the switching frequencies of the LED lamps according to the corresponding relationship between the information of the three primary colors and the switching frequencies of the LED lamps in the LED lamp group, and then controls the switches and the brightness of the LED lamps according to the switching frequencies of the LED lamps, such that the shell provided with the LED lamp group displays a corresponding color. As such, the present disclosure implements that the UE may use the color acquired from the exterior environment as the shell color of the UE, so that the alterable range of the shell color of the UE may be improved greatly and the limitation to the change in the shell color of the UE due to the geography location may be avoided.

### BRIEF DESCRIPTION OF THE DRAWINGS

Fig. 1 is a structure diagram of an electronic UE of the disclosure;
Fig. 2 is a structure diagram of an LED driver of the disclosure;
Fig. 3 is a structure diagram of connection of a shell and an LED lamp group according to the disclosure; and
Fig. 4 is a flowchart of a method for setting a shell color of an electronic UE according to the disclosure.

### DETAILED DESCRIPTION

In order to enable those skilled in the art to more clearly understand the disclosure, the technical solutions of the present disclosure are elaborated below according to the following specific embodiments with the accompanying drawings.

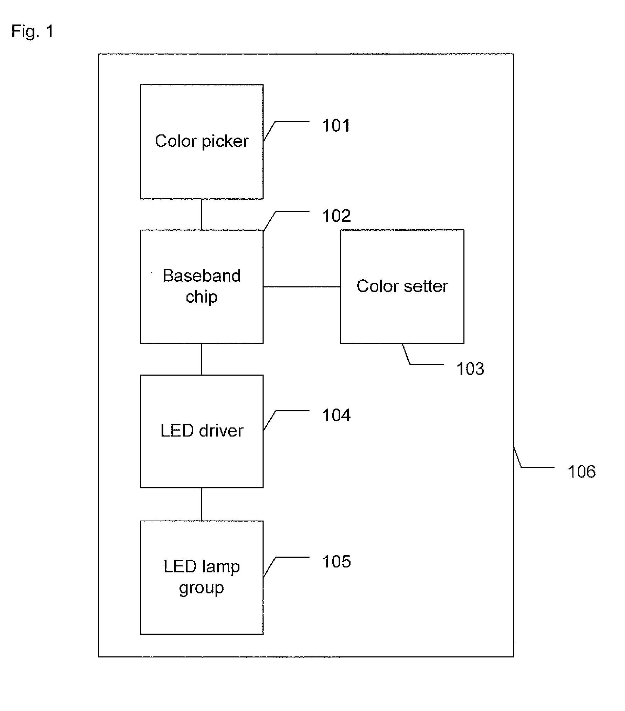

Fig. 1 illustrates a structure diagram of an electronic UE of the disclosure. The UE includes a shell 106, which is made of a light transmission material. The UE is able to control the shell 106 to change the color of the shell 106, and the specific implementation is as follows.

In an embodiment of the application, the shell 106 is provided with an LED lamp group 105. The LED lamp group 105 is arranged in the surface of the shell 106 or inside the shell 106. In addition, in order to enable the color of the shell 106 lighted by LED lamps to be uniform, the shell 106 also includes a light guide plate, which makes the color of the shell 106 lighted by the LED lamps to be uniform.

Furthermore, the LED lamp group 105 at least includes LED lamps having three primary colors (red, blue and green). Therefore, the color of the shell 106 lighted by the LED lamps is changed by controlling the switches and the brightness of the LED lamps having the three primary colors.

The color displayed on the shell 106 is adjusted based on selection information of a user, and the color on the shell 106 may be a photo stored in the UE, the color acquired from a color material, or the color of the environment around the UE.

To display on the shell 106 the color of the environment around the UE, in the embodiment, a color picker 101 is arranged in the UE. The color picker 101 is configured to acquire the color information stored in the UE or the color information of the environment around the UE, and acquire the display color information of M colors in the color information and the information of three primary colors corresponding to the display color information of each color, wherein M is greater than or equal to 1.

The color picker 101 may be a camera, or another device acquiring the color information of an external environment. In an embodiment of the application, the color picker 101 at first acquires the color information of the environment around the UE, e.g., acquiring the color information of the external environment by taking a photo or camera shooting, such that the display color information of M colors may be acquired by the color picker 101 from the photo or the shot image.

Since the LED lamps of the LED lamp group 105 are the LED lamps having the three primary colors, it needs to acquire the information of the three primary colors (red, green and blue) to which the display color information corresponding to each color of the M colors corresponds.

To this end, the color picker 101 includes three color filters sensing three primary colors. The color filters sensing three primary colors acquire the information of the three primary colors corresponding to the three primary colors respectively. The three color filters are red, green and blue filters respectively. One of the M colors is sent to the red, green and blue filters simultaneously. Since each of the red, green and blue filters can only sense the brightness value of a corresponding color, the information of red, green, and blue (i.e., the brightness values of red, green, and blue) can be acquired by the color filters sensing the three primary colors.

For example, after the color filters sensing three primary colors acquire the information of white, the red, green, and blue filters will respectively sense the brightness values of red, green, and blue in white. Here, the brightness value of red is 30, the brightness value of green is 59, and the brightness value of blue is 11. Therefore, the ratio among the brightness values of red, green and blue in white is 3.0:5.9:1.1.

Therefore, the information of the three primary colors acquired by the color picker 101 includes the brightness value of each of the three primary colors and the ratio among the brightness values of the three primary colors.

In order to enable the display color information of the M colors and the information of the three primary colors corresponding to the display color information of each color to be stored for a long time and be taken at any time, a baseband chip 102 and a color setter 103 are arranged in the UE.

The baseband chip 102 is connected with the color picker 101, and the baseband chip 102 is configured to receive and store the display color information of the M colors and the information of the three primary colors corresponding to the display color information of each color acquired by the color picker 101.

The color setter 103 is connected with the baseband chip 102, and the color setter 103 is arranged in the UE. When the UE receives the information that a user needs to change the color of the shell 106 of the UE, the color setter 103 reads the display color information of the M colors from the baseband chip 102, and displays the M colors according to the display color information of the M colors, such that the user may select a first color required by the user from the displayed M colors.

After the color setter 103 receives the information indicating the user selects the first color from the M colors, the color setter 103 sends, to the baseband chip 102, the display color information corresponding to the first color selected by the user.

Since the baseband chip 102 stores the display color information of the M colors and the information of the three primary colors corresponding to the display color information of each color, after receiving the display color information of the first color, the baseband chip 102 takes the information of the three primary colors corresponding to the first color according to the display color information of the first color, and sends the information of the three primary colors to an LED driver 104.

After the LED driver 104 receives the information of the three primary colors, the LED driver 104 controls the switches and the brightness of multiple LED lamps of the LED lamp group 105 based on the information of the three primary colors, such that the shell 106, which is provided with the LED lamp group 105, displays the first color.

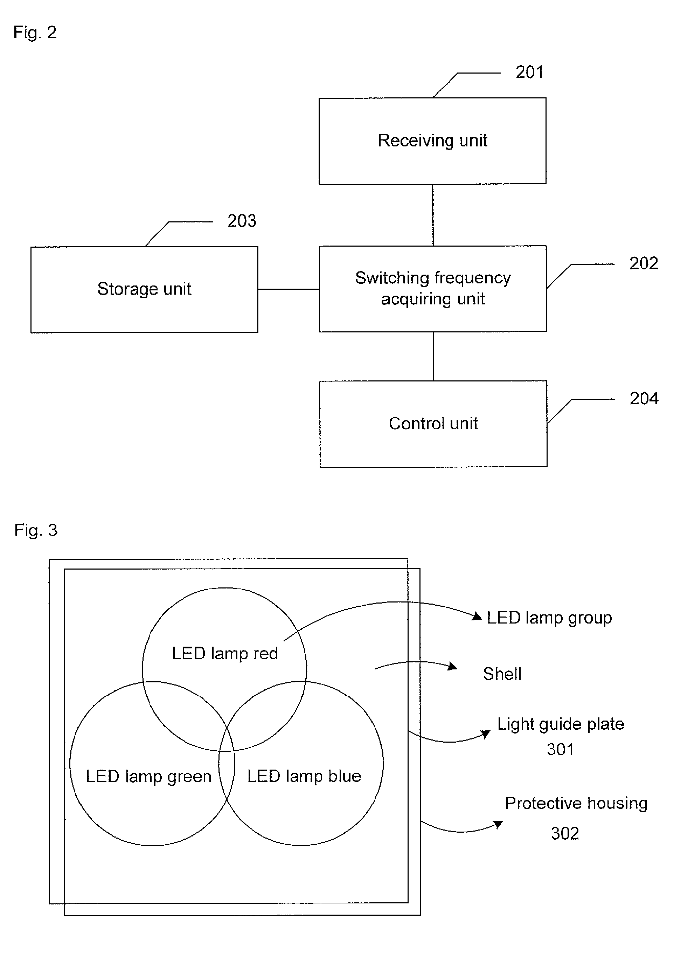

Fig. 2 illustrates a structure diagram of an LED driver. In the embodiment, the LED driver 104 specifically includes:
a receiving unit 201 configured to receive the information of the three primary colors from the baseband chip;
a switching frequency acquiring unit 202 configured to acquire a switching frequency of each LED lamp in the LED lamp group according to a corresponding relationship between the information of the three primary colors and switching frequencies of the multiple LED lamps in the LED lamp group, and acquire a ratio among switching frequencies of LED lamps corresponding to the three primary colors; and
a control unit 204 configured to control the switch and the brightness of each LED lamp in the LED lamp group according to the switching frequency of each LED lamp in the LED lamp group.

In order to enable the switching frequency unit to acquire the switching frequency of each LED lamp based on the information of the three primary colors, the LED driver also includes:
a storage unit 203, configured to store a relationship between the brightness value of a primary color and a switching frequency of the LED lamp having the said primary color.

After the baseband chip sends the information of the three primary colors to the LED driver, the receiving unit 201 of the LED driver receives the information of the three primary colors from the baseband chip and sends the information of the three primary colors to the switching frequency acquiring unit 202. After the switching frequency acquiring unit 202 acquires the information of the three primary colors, the switching frequency acquiring unit 202 takes the corresponding relationship, stored in the storage unit 203, between the brightness value of each of the three primary colors and the switching frequency of each LED lamp having a primary color, such that the switching frequency acquiring unit 202 obtains the switching frequency of each LED lamp having a primary color, and obtains the ratio among the switching frequencies of the LED lamps corresponding to the three primary colors.

The switching frequency acquiring unit 202 sends the switching frequencies of the LED lamps and the ratio among the switching frequencies of the LED lamps to the control unit 204. The control unit 204 controls the switches and brightness of each LED lamp in the LED lamp group according to the switching frequencies of the LED lamps and the ratio among the switching frequencies of the LED lamps.

In the embodiment, in order to enable the LED driver to precisely control the color generated by the LED lamp group through the switching frequencies of the LED lamps, the ratio among the brightness values of the three primary colors is equal to the ratio among the switching frequencies of the LED lamps corresponding to the three primary colors. For example, if the ratio among brightness values of three primary colors (red, green and blue) of white is 3.0:5.9:1.1, then the ratio among the switching frequencies of the LED lamps having red, green and blue is also 3.0:5.9:1.1 in the embodiment.

In order to make the color on the shell lighted by the LED lamp group to be more obvious, the switching frequency of each LED lamp obtained by the switching frequency acquiring unit 202 is multiples of 75Hz. Since the ratio among the switching frequencies of the LED lamps having red, green and blue is 3.0:5.9:1.1 for white, the switching frequencies of the LED lamps corresponding to the three primary colors to which white corresponds are that: the switching frequency of the LED lamp having red is 225Hz, the switching frequency of the LED lamp having green is 443Hz, and the switching frequency of the LED lamp having blue is 83Hz. The LED driver adjusts, according to the obtained switching frequencies of the LED lamps corresponding to the three primary colors, the shell of the UE to display white.

In addition, in the embodiment, the UE may also acquire the color information of pictures, themes or wallpapers stored in the UE, and can send the stored color information to the color filter of the color picker so as to analyze and then obtain the information of three primary colors corresponding to the color information, such that the LED lamp group is controlled to display a corresponding color according to the obtained information of three primary colors.

Fig.3 illustrates a structure diagram of connection of the shell of a UE and an LED lamp group. The LED lamp group may be arranged in the surface of the shell or inside the shell. In the embodiment, the LED lamp group is embedded inside the shell.

The shell includes a light guide plate 301 and a protective housing 302, and the LED lamp group is arranged between the light guide plate 301 and the protective housing 302. When the LED lamps in the LED lamp group are opened and display the color selected by a user, the light guide plate 301 may uniformly reflect, on the shell, the light of corresponding colors displayed by the LED lamps. Therefore, the color displayed on the shell is uniform.

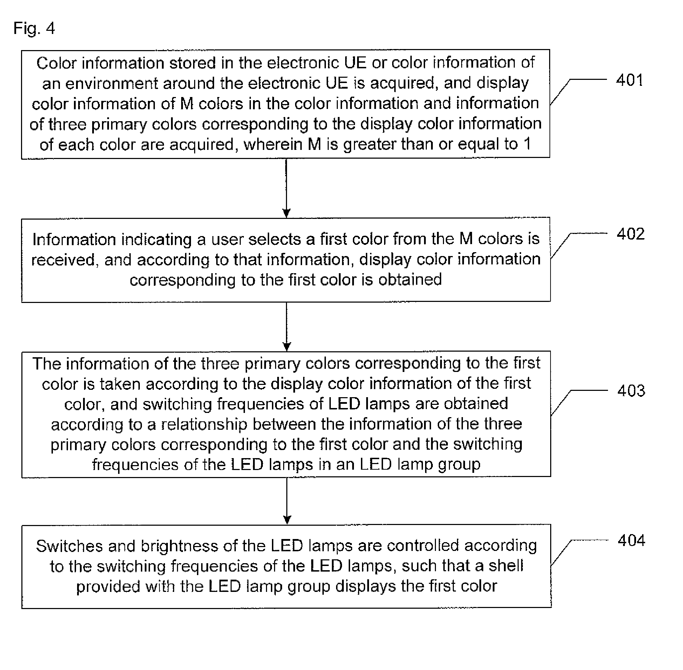

As illustrated in Fig. 4, an embodiment of the disclosure also provides a method for setting a shell color of an electronic UE. The method specifically includes:
Step 401: Color information stored in the electronic UE or color information of an environment around the electronic UE is acquired, and display color information of M colors in the color information and information of three primary colors corresponding to the display color information of each color are acquired, wherein M is greater than or equal to 1.
Step 402: Information indicating a user selects a first color from the M colors is received, and display color information corresponding to the first color is obtained according to that information.
Step 403: The information of the three primary colors corresponding to the first color is taken according to the display color information of the first color, and switching frequencies of LED lamps are obtained according to a relationship between the information of the three primary colors corresponding to the first color and the switching frequencies of the LED lamps in an LED lamp group.
Step 404: Switches and brightness of the LED lamps are controlled according to the switching frequencies of the LED lamps, such that a shell provided with the LED lamp group displays the first color.

One or more of the technical solutions according to the embodiments of the disclosure at least have the following technical effect:

With the electronic UE and the method for setting a shell color thereof provided by the disclosure, the UE acquires the color information stored in itself or the color information of the environment around the UE, acquires the display color information of each color in the color information and the information of the three primary colors corresponding to the display color information of each color, obtains the switching frequencies of the LED lamps according to the corresponding relationship between the information of the three primary colors and the switching frequencies of the LED lamps in the LED lamp group, and then controls the switches and the brightness of the LED lamps according to the switching frequencies of the LED lamps, such that the shell provided with the LED lamp group displays a corresponding color. As such, the present disclosure implements that the UE may use the color acquired from the exterior environment as the shell color of the UE, so that the alterable range of the shell color of the UE may be improved greatly and the limitation to the change in the shell color of the UE due to the geography location may be avoided.

Obviously, those skilled in the art can make various modifications and variations to the disclosure without departing from the concept and scope of the disclosure. Thus, if these modifications and variations of the disclosure fall within the scope of the claims of the disclosure and equivalent technologies thereof, the disclosure is also intended to include these modifications and variants.

### INDUSTRIAL APPLICABILITY

By means of the method and UE provided by the disclosure, the alterable range of the shell color of the UE may be improved greatly, and the limitation to the change in the shell color of the UE due to the geography location may be avoided.

## Claims

1. An electronic User Equipment (UE), comprising:
a shell, made of a light transmission material;
a Light Emitting Diode (LED) lamp group, arranged in a surface of a shell or inside the shell;
an LED driver, connected with the LED lamp group and configured to control switches and brightness of the LED lamp group;
a color picker, configured to acquire color information stored in the electronic UE or color information of an environment around the electronic UE, and acquire display color information of M colors in the color information and information of three primary colors corresponding to display color information of each color, wherein M is greater than or equal to 1;
a baseband chip, arranged in the electronic UE, connected with the color picker, and configured to receive and store the display color information of the M colors and the information of the three primary colors corresponding to the display color information of each color; and
a color setter, arranged in the electronic UE, connected with the baseband chip, and configured to: read the display color information of the M colors from the baseband chip, display the M colors, and after receiving information indicating a user selects a first color from the M colors, send display color information corresponding to the first color to the baseband chip,
wherein after the baseband chip receives the display color information of the first color, the baseband chip takes information of three primary colors corresponding to the first color according to the display color information of the first color, and sends the information of the three primary colors corresponding to the first color to the LED driver; after the LED driver receives the information of the three primary colors corresponding to the first color, the LED driver controls switches and brightness of multiple LED lamps of the LED lamp group based on the information of the three primary colors corresponding to the first color, such that the shell provided with the LED lamp group displays the first color.

2. The electronic UE according to claim 1, wherein the LED driver comprises:
a receiving unit, configured to receive the information of the three primary colors from the baseband chip;
a switching frequency acquiring unit, configured to acquire a switching frequency of each LED lamp in the LED lamp group according to a relationship between the information of the three primary colors and switching frequencies of the multiple LED lamps in the LED lamp group, and acquire a ratio among switching frequencies of LED lamps corresponding to the three primary colors; and
a control unit, configured to control the switch and the brightness of each LED lamp in the LED lamp group according to the switching frequency of each LED lamp in the LED lamp group.

3. The electronic UE according to claim 1, wherein the information of the three primary colors in the color picker comprises a brightness value of each of the three primary colors and a ratio among brightness values of the three primary colors.

4. The electronic UE according to any one of claims 1 to 3, wherein the color picker comprises three color filters sensing the three primary colors, wherein each color filter acquires a brightness value of a respective one of the three primary colors.

5. The electronic UE according to claim 4, wherein the LED lamp group at least comprises LED lamps each having a respective primary color.

6. The electronic UE according to claim 5, wherein the LED driver further comprises:
a storage unit, configured to store a relationship between the brightness value of a primary color and a switching frequency of the LED lamp having the said primary color.

7. The electronic UE according to claim 6, wherein the ratio among the brightness values of the three primary colors in the baseband chip is equal to the ratio among the switching frequencies of LED lamps corresponding to the three primary colors acquired by the LED driver.

8. The electronic UE according to claim 7, wherein the shell comprises a light guide plate and a protective housing,
wherein the light guide plate enables a color generated by the LED lamp group to be irradiated uniformly on the shell.

9. A method for setting a shell color of an electronic User Equipment (UE), comprising:
acquiring color information stored in the electronic UE or color information of an environment around the electronic UE, and acquiring display color information of M colors in the color information and information of three primary colors corresponding to display color information of each color, wherein M is greater than or equal to 1;
receiving information indicating a user selects a first color from the M colors, and according to that information obtaining display color information corresponding to the first color;
taking information of three primary colors corresponding to the first color according to the display color information of the first color, and obtaining switching frequencies of Light Emitting Diode (LED) lamps according to a relationship between the information of the three primary colors corresponding to the first color and the switching frequencies of the LED lamps in an LED lamp group; and
controlling switches and brightness of the LED lamps according to the switching frequencies of the LED lamps, such that a shell provided with the LED lamp group displays the first color.
